# EUROPEAN PATENT APPLICATION

(11) **EP 1 670 113 A2**
(43) Date of publication of application: **14.06.2006**
(21) Application number: 05026901.8
(22) Date of filing: 08.12.2005
(51) Int. Cl.: H02J 7/00

(54) **Voltage equalization control system of accumulator**

(30) Priority: 08.12.2004 JP 2004355299
(71) Applicant: FUJI JUKOGYO KABUSHIKI KAISHA, Tokyo (JP)
(72) Inventor: Sakurai, Masato, Shinjuku-ku Tokyo (JP); Anzawa, Seiichi, Shinjuku-ku Tokyo (JP); Kobayashi, Katsumi, Shinjuku-ku Tokyo (JP)
(74) Representative: Grünecker, Kinkeldey, Stockmair & Schwanhäusser Anwaltssozietät

(57) **Abstract**

A maximum/minimum voltage detector (4) detects a maximum terminal voltage and a minimum terminal voltage of a plurality of accumulators (CL). A voltage difference calculator (5) calculates a voltage difference between the maximum terminal voltage and the minimum terminal voltage. A timer setting unit (6) sets an operational time of a timer according to the voltage difference. An operational time controller (7) presets the operational time in the timer (6) to temporally control the operation of the voltage balanced circuit (3). Accordingly, an unnecessary loss of energy due to the long time operation of the voltage balance circuit (3) is prevented, and a performance of the assembled battery (2) is maintained.

## Description

### CROSS REFERENCE TO RELATED APPLICATIONS

The present application claims foreign priority based on Japanese Patent Application No. P.2004-355299, filed on December 8, 2004, the contents of which are incorporated herein by reference.

### BACKGROUND OF THE INVENTION

### <FIELD OF THE INVENTION>

The invention relates to a voltage equalization control system of accumulator that equalizes voltages in a plurality of accumulators forming an assembled battery.

### <RELATED ART>

There is a compact accumulator of high energy density, such as a rechargeable lithium-ion battery and an electric double layer capacitor. It is regarded as a dominant power source of, for example, an electric vehicle run by motor or a hybrid car run by combination of engine and motor. In the accumulator, a desired voltage can be obtained by forming an assembled battery with a plurality of cells connected in series. However, there occurs a difference of voltage in each cell owing to a difference in its capacitance and internal resistance through the repetition of charge/discharge. So, there is a possibility of deteriorating the cells because excessive voltage and inversion of polarity occur in the respective cells. Therefore, a voltage equalizer which equalizes the voltages of the respective cells is necessary in order to maintain the discharge performance while restraining the deterioration of the cells.

This kind of voltage equalizer is disclosed in JP-A-2002-223528 filed by the applicant of the present application. This voltage equalizer is provided with: one closed circuit formed by a plurality of storage elements of one storage element group connected in series, a plurality of secondary windings magnetically coupled with each other, and one switching element; and the other closed circuit formed by a plurality of storage elements of the other storage element group, a primary winding magnetically coupled in common with the secondary windings, and the other switching element. The above one switching elements and the other switching element are turned on-off alternately, thereby transferring energy between cells and equalizing output voltages in the one storage: elements connected in series.

Generally, it is necessary to carry out a voltage equalizing operation for accumulators forming an assembled battery in a stable state of less load. Accordingly, for example, in an electric vehicle and a hybrid car, a voltage equalizer is operated to carry out the voltage equalization after turning off a key switch and stopping the vehicle.

In order to carry out the voltage equalization, however, another power source for operating a voltage equalizer is necessary, and when the power source cannot be prepared, power has to be supplied to the voltage equalizer from the assembled battery itself which is a target for voltage equalization. When a voltage difference between cells is comparatively large and it takes a long time to do the voltage equalizing processing, in addition to the energy consumed by the voltage equalizer, a loss in energy transfer between cells at a voltage equalization reaches such a high level non negligible that the remaining energy is almost exhausted in the assembled battery on the whole, which hinders from maintaining the operation by using the performance of the assembled battery.

Especially, when an assembled battery is formed by using the accumulator such as a capacitor, since the capacitor has smaller electric capacity than a general secondary battery, the remaining energy of the capacitor is decreased and the terminal voltage is lowered when the voltage equalizer is operated for a long time. The capacitor has characteristic of emitting a larger power temporarily according as it keeps a higher voltage and the remaining energy is larger, and it is very effective in starting a vehicle. When using it for a long time, however, its characteristic cannot be fully shown.

### SUMMARY OF THE INVENTION

One or more embodiments of the present invention provide a voltage equalization control system of accumulator which can moderate a decrease of the remaining energy in an assembled battery formed by a plurality of accumulators owing to long time operation for voltage equalization, so as to maintain a performance of the assembled battery.

In accordance with one or more embodiments of the present invention, a voltage equalization control system of accumulator is provided with:
a voltage equalization unit which equalizes voltages in a plurality of accumulators forming an assembled battery; a voltage detector which detects the maximum voltage and the minimum voltage of the accumulators; a voltage difference calculator which calculates a voltage difference between the maximum voltage and the minimum voltage detected by the voltage detector; an operational time setting unit which sets an operational time of operating the voltage equalization unit, according to the voltage difference calculated by the voltage difference calculator; and an operational time controller which operates the voltage equalization unit within the operational time set by the operational time setting unit, hence to do the voltage equalizing operation on the accumulators and stops the voltage equalization unit at a time of exceeding the operational time.

In the voltage equalization control system, it is preferable that the operational time is reset properly according to the latest value of the voltage difference varying according to the voltage equalizing operation and that the time period for stopping the voltage equalization unit is reset according to the reset operational time. It is preferable that the voltage equalization unit is stopped when the voltage difference converges to a predetermined target value and less within the operational time. The operational time can be set according to the convergent time toward the average voltage in a pattern of getting in halves the number of the accumulators having the maximum voltage and the number of the accumulators having the minimum voltage in the assembled battery.

In accordance with one or more embodiments of the present invention, a voltage equalization control system of accumulator is provided with: a plurality of module voltage equalization units which equalize voltages of a plurality of accumulators forming a battery module in a plurality of the battery modules forming an assembled battery; a voltage detector which detects the maximum voltage and the minimum voltage of all the accumulators of the assembled battery; a voltage difference calculator which calculates a voltage difference betvaeen the maximum voltage and-the minimum voltage detected by the voltage detector; an operational time setting unit which sets an operational time of operating the module voltage equalization units according to the voltage difference calculated by the voltage difference calculator; and an operational time controller which operates the module voltage equalization units within the operational time set by the operational time setting unit, hence to do the voltage equalizing operation on the accumulators and stops the module voltage equalization units at a time of exceeding the operational time.

In the system, it is preferable that the operational time is set according to the convergent time toward the average voltage in a pattern where one half of the accumulators have the maximum voltage and the other half of the accumulators having the minimum voltage in the assembled battery. Also in this case, it is preferable that the operational time is reset properly according to the latest value of the voltage difference varying according to the voltage equalizing operation and that the time period for stopping the module voltage equalization units is reset according to the reset operational time.

Accordingly, the voltage equalization control system of accumulator can avoid the long time operation of voltage equalization for the assembled battery formed by a plurality of accumulators, moderate a decrease in the remaining energy, and maintain the performance of the assembled battery.

Other aspects and advantages of the invention will be apparent from the following description and the appended claims.

### BRIEF DESCRIPTION OF THE DRAWINGS

Fig. 1 is a structural view of a voltage equalization control system according to a first embodiment of the invention.
Fig. 2 is a circuit diagram of a voltage balanced circuit according to the first embodiment of the invention.
Fig. 3A is an explanatory view of a timer selection map based on a voltage difference.
Fig. 3B is an explanatory view of a timer selection map based on a maximum terminal voltage and a voltage difference.
Fig. 4 is a view for use in describing an expanded function of the voltage equalization control system according to the first embodiment of the invention.
Fig. 5 is a structural view of a voltage equalization control system according to a second embodiment of the invention.
Fig. 6 is a circuit diagram of a voltage balanced circuit according to the second embodiment of the invention.

### DESCRIPTION OF THE PREFERRED EMBODIMENTS

Embodiments of the invention will be described with reference to the accompanying drawings.

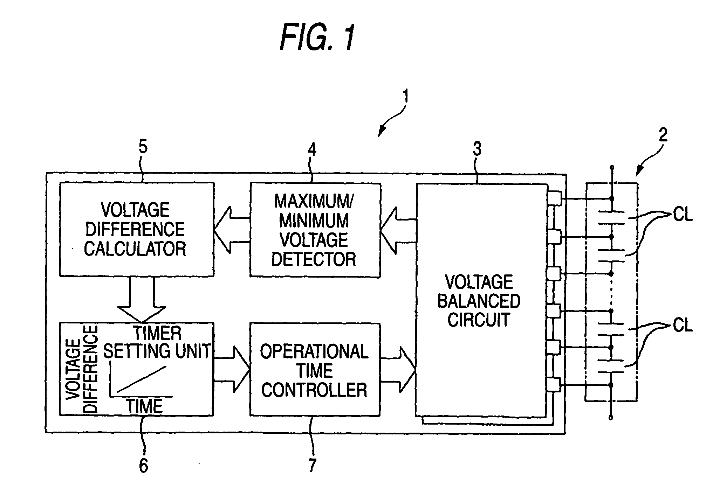

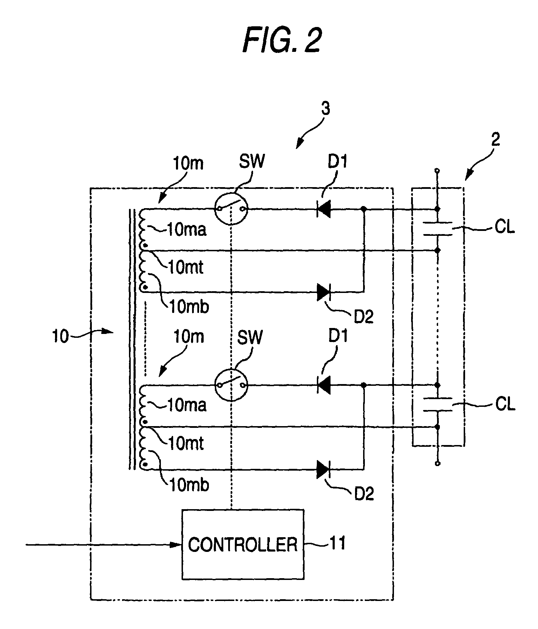

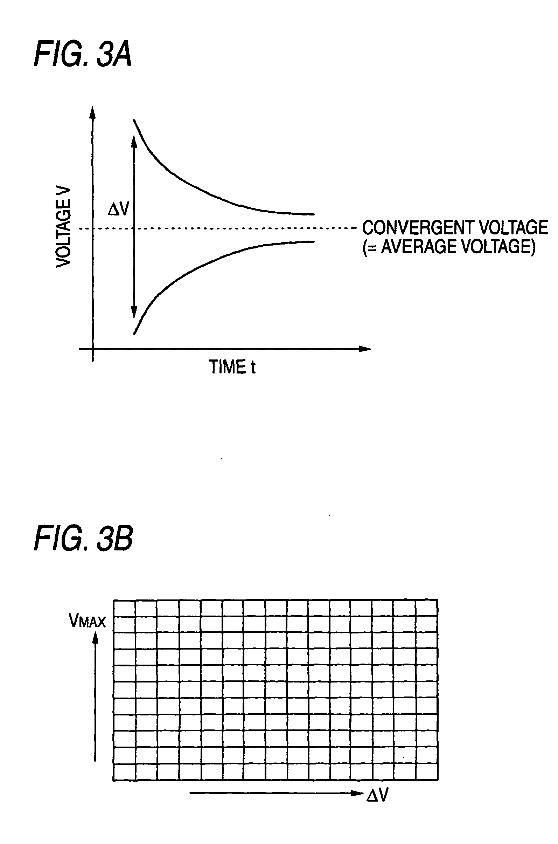

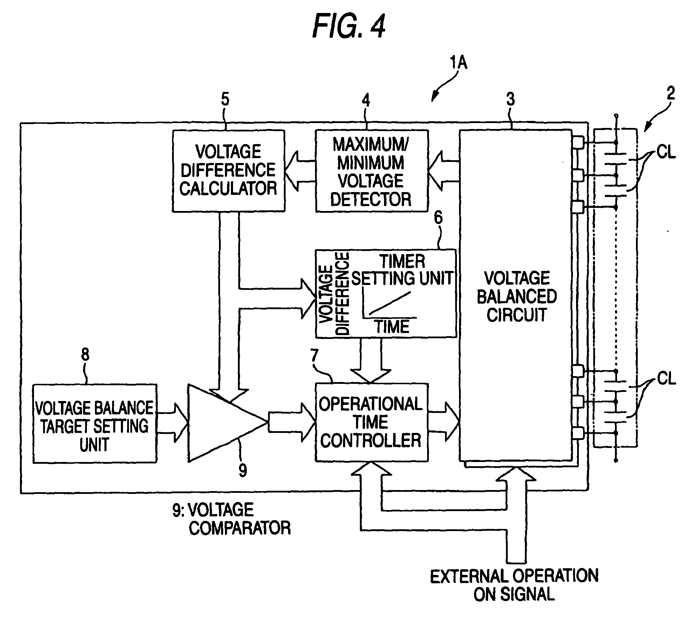

Figs. 1 to 4 are concerned about a first embodiment of the: invention: Fig. 1 is a structural view of a voltage equalization control system; Fig. 2 is a circuit diagram of a voltage balanced circuit; Fig. 3A is an explanatory view of the timer selection map based on a voltage difference; Fig. 3B is an explanatory view of the timer selection map based on the maximum terminal voltage and the voltage difference; and Fig. 4 is an explanatory view showing the expanded function of the voltage equalization control system.

The voltage equalization control system 1 shown in Fig. 1 is mainly applied to a power source of low voltage mechanism (for example, 12V battery of a vehicle) and intended to an assembled battery 2 which is used as the power source of low voltage mechanism with the comparatively small number of accumulators CL, ... connected in series. In the embodiment, an accumulator CL is assumed to be, for example, a rechargeable lithium-ion battery or an electric double layer capacitor. A single cell of the above, a plurality of the series connected cells, a plurality of the parallel connected cells, and their combination are to be represented as the accumulator CL.

The voltage equalization control system 1 is provided with a voltage balanced circuit (voltage equalization unit) 3 which equalizes the terminal voltages in a plurality of accumulators CL, ... through energy transfer between the accumulators CL, ..., a maximum/minimum voltage detector (voltage detector) 4 which detects the maximum terminal voltage and the minimum terminal voltage of the cell voltages after detecting the terminal voltage (cell voltage) in every accumulator CL and comparing with each other, a voltage difference calculator 5 which calculates a voltage difference between the maximum terminal voltage and the minimum terminal voltage detected by the maximum/minimum voltage detector 4, a timer setting unit (operational time setting unit) 6 which sets an operational time of the timer according to the voltage difference calculated by the voltage difference calculator 5, and an operational time controller 7 which presets the operational time set by the timer setting unit 6 in the timer and operates the voltage balanced circuit 3 at the set time.

In this embodiment, each functional unit (the maximum/minimum voltage detector 4, the voltage difference calculator 5, the timer setting unit 6, and the operational time controller 7) for controlling the voltage balanced circuit 3 is formed by the firmware of a microcomputer including amplifiers and peripheral circuits which detect the voltages of the respective accumulators CL. As the voltage balanced circuit 3, a circuit using a transformer or a circuit using the power source IC being insulated can be used. The whole voltage equalization control system 1 can be formed as the firmware also including the function of the voltage balanced circuit 3.

Fig. 2 shows an example of the voltage balanced circuit 3 using a transformer, which equalizes the cell voltages through charging and discharging by using a dielectric voltage of the transformer 10 having an iron core. More specifically, the transformer 10 has a plurality of basic windings 10 m, ... provided correspondingly to the respective accumulators CL, ..., and each of the basic windings 10 m includes a first winding 10 ma and a second winding 10 mb which are divided from a center tap 10 mt. It is designed in that the number of windings is identical in the respective basic windings 10 m, ... and that the number of the first windings 10 ma is equal to the number of the second windings 10 mb.

The center tap 10 mt works as a winding start terminal of the first winding 10 ma and a winding end terminal of the second winding 10 mb and it is connected to a negative electrode of the corresponding accumulator CL. A switching element SW and a first diode Dl are connected between the winding end terminal of the first winding 10 ma and the positive electrode of the corresponding accumulator CL, and the winding start terminal of the second winding 10 mb is connected to the positive electrode of the corresponding accumulator CL through a second diode D2.

The switching element SW uses a semiconductor switch such as FET, and it is turned on/off according to a pulse control signal supplied from a controller 11. The controller 11 includes a pulse oscillator and makes this pulse oscillator oscillate, for example, in some KHz frequencies, to create a pulse control signal, and controls the switching elements SW, ... on/off in synchronization.

Thus, when the respective switching elements SW are turned on in synchronization, a series circuit is formed which can transmit electricity from each of the accumulators CL to each of the first windings 10 ma of the basic windings 10 m through each corresponding first diode D1, and each of the series circuits of the basic windings 10 m is connected in parallel. When the number of windings is identical in each basic winding 10 m, accumulated current according to the accumulation of energy into the transformer 10 flows from the accumulator CL of the maximum terminal voltage Vmax to the basic winding 10 m.

While, when the respective switching elements SW are thereafter turned off in synchronization, a series circuit is formed which can transmit electricity from each of the second windings 10 mb of the basic windings 10 m to each of the accumulators CL through each corresponding second diode D2, and each of the series circuits of the basic windings 10 m is connected in parallel. Accordingly, discharge current according to the energy discharge from the transformer 10 flows from the basic winding 10 m to the accumulator CL of the minimum terminal voltage Vmin.

When the respective switching elements SW are turned on, the accumulated current according to the energy accumulation into the transformer 10 flows from the accumulator CL of the maximum terminal voltage Vmax to the basic winding 10 m, while when the respective switching elements SW are turned off, the discharge current according to the energy discharge from the transformer 10 flows from the basic winding 10 m to the accumulator CL of the minimum terminal voltage Vmin, and as a result, the voltage equalizing operation is performed among the cells at the both points of accumulating energy into the transformer 10 and discharging energy from the transformer 10.

The above voltage balanced circuit 3 is controlled to operate within the operational time set based on the voltage difference between the maximum terminal voltage and the minimum terminal voltage. Namely, when any different power source for operating the voltage balanced circuit 3 cannot be provided, the assembled battery 2 itself has to supply the power, and since the transfer of energy between the accumulators CL in the voltage equalization is accompanied by loss, when the voltage balanced circuit 3 is operated for a long time, the consumption energy of the whole assembled battery 2 reaches a non-negligible level and the remaining energy is decreased on the whole.

In particular, when the assembled battery 2 is formed by the capacitors as the accumulators CL and it is applied to a battery of vehicle, because of the characteristic of the capacitor, it can discharge a larger electricity temporarily according as it keeps a higher voltage with the larger the remaining energy, and it can get a favorable starting operation. The capacitor, however, has a smaller capacitance than the general secondary battery, and therefore, when it performs the voltage equalizing operation through a long time operation by the voltage balanced circuit 3, the remaining energy of the capacitor is decreased, the terminal voltage is deteriorated, and there is a fear that a favorable starting operation cannot be obtained.

According to the maximum/minimum voltage detector 4, the voltage difference calculator 5, the timer setting unit 6, and the operational time controller 7, the voltage equalizing operation is performed by the voltage balanced circuit 3 for the time set depending on the voltage difference between the maximum terminal voltage and the minimum terminal voltage of the cell voltages in every accumulator CL, hence to prevent from unnecessary energy loss owing to the voltage equalizing operation by the voltage balanced circuit 3.

The maximum/minimum voltage detector 4 includes an amplifier for detecting a terminal voltage in every accumulator CL, and the output voltages of the respective amplifiers are compared with each other by using a multi-staged comparator, hence to detect the maximum terminal voltage Vmax and the minimum terminal voltage Vmin. The voltage difference ΔV between the maximum terminal voltage Vmax and the minimum terminal voltage Vmin detected is calculated by the voltage difference calculator 5 and sent to the timer setting unit 6.

The timer setting unit 6 sets the preset value of the timer (count down timer in this embodiment) which sets the time for voltage equalizing operation of the voltage balanced circuit 3, with the voltage difference ΔV as parameter, referring to the timer selection map previously stored. The voltage equalizing operation of the assembled battery 2 in the voltage balanced circuit 3 becomes a convergent operation into the average voltage obtained by averaging the total sum of the terminal voltages in the respective accumulators CL, and the time required for equalizing the terminal voltages between the accumulators CL needs complicated calculation, depending on the characteristic of the accumulator CL, the number of the accumulators CL forming the assembled battery 2, the control method of the voltage balanced circuit 3, and the voltage equalizing ability. When the energy shift amount of voltage equalization is the maximum, it takes the longest time for the voltage equalization.

Since in the accumulator CL such as a lithium-ion battery and a capacitor, its energy can be estimated by the terminal voltage thereof, the energy shift amount for voltage equalization gets greater according as the voltage difference becomes larger between the accumulators CL, ..., and at a place where there is no voltage difference, the energy shift amount for equalization gets greater according as the terminal voltage of the accumulator CL becomes higher. Considering the voltage equalization within the normal voltage range free from excessive charge and excessive discharge, the energy shift amount for equalization becomes maximum in a pattern of getting in halves the number of the cells having the maximum terminal voltage and the number of the cells having the minimum terminal voltage within this normal voltage range, when it takes the longest time to converge to the convergent voltage between the maximum terminal voltage and the minimum terminal voltage (the mean voltage between the maximum terminal voltage and the minimum terminal voltage), as illustrated in Fig. 3A.

More specifically, considering the upper limited voltage (the maximum voltage normally chargeable) and the lower limited voltage (the minimum voltage normally dischargeable) which assure the characteristic of the accumulator CL, a timer selection map characterized as shown in Fig. 3A is created in a pattern where a half of the cells have the upper limited voltage as the maximum terminal voltage and another half of the cells having the lower limited voltage as the minimum terminal voltage. In this timer selection map, the time required for equalization through convergence of the voltage of each cell within the set range is previously obtained through simulation or experiment with the voltage difference ΔV used as a parameter and stored as the preset value of the timer, considering the characteristic of the accumulator CL, the number of the accumulators CL forming the assembled battery 2, the control method of the voltage balanced circuit 3, and the voltage equalization ability.

In the timer selection map with the upper limited voltage of the accumulator as reference, when the terminal voltage of the accumulator CL is the highest in the normal range, the voltage difference ΔV is used as the parameter, to determine the operation time of the voltage balanced circuit 3, and when the actual maximum terminal voltage Vmax of the accumulator CL is lower than the upper limited voltage, since the time required for equalization becomes shorter than the operation time determined according to the map, this can be uniformly applied to various situations where the actual maximum terminal voltage Vmax varies. Although the map has a comparatively simple structure, equalization can be performed with practically adequate accuracy and it can restrain the unnecessary energy loss by avoiding the long time operation for voltage equalization.

In this case, in order to strictly determine the operational time of voltage equalization, as illustrated in Fig. 3B, a timer selection map with the maximum terminal voltage Vmax and the voltage difference ΔV as the parameters is created and this timer selection map may be used. In the timer selection map based on the maximum terminal voltage Vmax and the voltage difference ΔV, the relationship between the voltage difference ΔV and the operational time becomes the same feature as shown in Fig. 3A in a place where the maximum terminal voltage Vmax in the map corresponds to the upper limited voltage, and the larger the voltage difference ΔV becomes, the longer it takes for voltage equalization. In a place where there is no voltage difference ΔV, the higher the maximum terminal voltage Vmax in the map becomes, the longer it takes for voltage equalization.

The time set by using the above timer selection map is preset in the timer by the operational time controller 7. The operational time controller 7 supplies a control signal for supplying an oscillation pulse to the controller 11 of the voltage balanced circuit 3, to start the voltage equalizing operation, and makes the timer operate to start the countdown at a predetermined timing when the assembled battery 2 is in a rest state, for example, when the assembled battery 2 is used for the power source of a hybrid car or an electric vehicle, at a timing after a vehicle stops at a key switch off.

During the countdown of the timer, the operating time of the voltage balanced circuit 3 is properly modified through feedback of cell voltage by the voltage balanced circuit 3. Namely, when the timer starts and the equalizing operation of each cell by the voltage balanced circuit 3 starts, the maximum/minimum voltage detector 4 monitors the voltage of each cell as needed and the voltage difference ΔV between the maximum terminal voltage Vmax and the minimum terminal voltage Vmin calculated by the voltage difference calculator 5 is properly updated. Every time this voltage difference ΔV is updated, the timer setting unit 6 resets the preset value of the timer by using the timer selection map and supplies it to the operational time controller 7.

As for the latest timer preset value entered from the timer setting unit 6, the operational time controller 7 compares the remaining time Told to the time of stopping the voltage balanced circuit 3 according to the current count value of the timer with the operating time Tnew of the voltage balanced circuit 3 according to the new preset value. When a condition Told>Tnew is satisfied according to the progress of the voltage equalizing operation, a new preset value is reset in the timer and the operating time of the voltage balanced circuit 3 is modified.

Thereafter, when the count value of the timer becomes 0 and the countdown according to the preset value is finished, the operational time controller 7 supplies a stopping signal to the voltage balanced circuit 3, hence to stop the voltage equalizing operation. The voltage equalizing operation by the voltage balanced circuit 3 is stopped by a control signal of stopping the pulse oscillation supplied from the operational time controller 7 to the controller 11, or by the shutoff of the power source for the voltage balanced circuit 3.

The above temporal control for voltage equalization by the timer can be expanded by adding the control item or the control parameter. Fig. 4 shows the structure of a voltage equalization control system 1A with the convergence voltage and the longest time limited, which comprises a voltage balance target setting unit 8 and a voltage comparator 9 in addition to the units of the voltage equalization control system 1, that is, the voltage balanced circuit 3, the maximum/minimum voltage detector 4, the voltage difference calculator 5, the timer setting unit 6, and the operational time controller 7.

The voltage balance target setting unit 8 is to set the target value (voltage width) of the convergence voltage in equalizing the voltage of the respective accumulators CL, ... through temporal operation of the voltage balanced circuit 3 according to the timer, the voltage comparator 9 compares the voltage difference ΔV with the target value, and depending on the comparison result, the voltage balanced circuit 3 is turned off according to the temporal operation or forced outage of the timer. The voltage equalization control system 1A can turn on the voltage balanced circuit 3 so to do the equalization operation according to an external operation ON signal input to the operational time controller 7.

Specifically, when a condition that the voltage difference ΔV is the target value and less is satisfied, when the timer is before start, the voltage balanced circuit 3 is turned off and not operated, and when the timer starts countdown and the voltage balanced circuit 3 is operated, the voltage balanced circuit 3 is forcedly turned off even when the timer is counting down. In this case, even when the voltage balanced circuit 3 is operated, when the voltage difference ΔV does not converge to the target value previously set and the less, the longest operating time of the voltage balanced circuit 3 is controlled according to the temporal operation depending on the voltage difference ΔV by the timer.

When the condition that the voltage difference ΔV is the target value and less is not satisfied within the time limit of the timer in the operational time controller 7, for example, after the predetermined number of times of failure in the condition, the accumulator CL is judged to be degraded and the voltage balanced circuit 3 is forcedlyturned off and locked. In this case, even when an external operation ON signal is entered, the voltage balanced circuit 3 never operates and it is locked in the off-state, thereby securing the safety.

The operational time controller 7 may control the switching frequency of the switching element SW in the equalizing operation of the voltage balanced circuit 3 to vary depending on the voltage difference ΔV. Specifically, when the voltage difference AV is large, the switching frequency is set low, hence to make the ON time of the switching element SW longer, thereby enhancing the equalization processing ability, while when the voltage difference ΔV is small, the switching frequency is set high, hence to make the ON time of each switching element SW shorter and to decrease the accumulated energy and the discharge energy into and from the transformer 10, thereby decreasing the useless loss.

As mentioned above, according to the embodiment, since the voltage equalization can be performed by the voltage balanced circuit 3 at the optimum timing depending on the state of the individual accumulators CL forming the assembled battery 2, the long time voltage equalizing operation can be avoided and a decrease in the remaining energy can be moderated, hence to maintain the quality of battery.

When it does not converge to the target value within the set time of the timer, the assembled battery can be judged to be defective or degraded and the quality of the battery can be maintained in the optimum state.

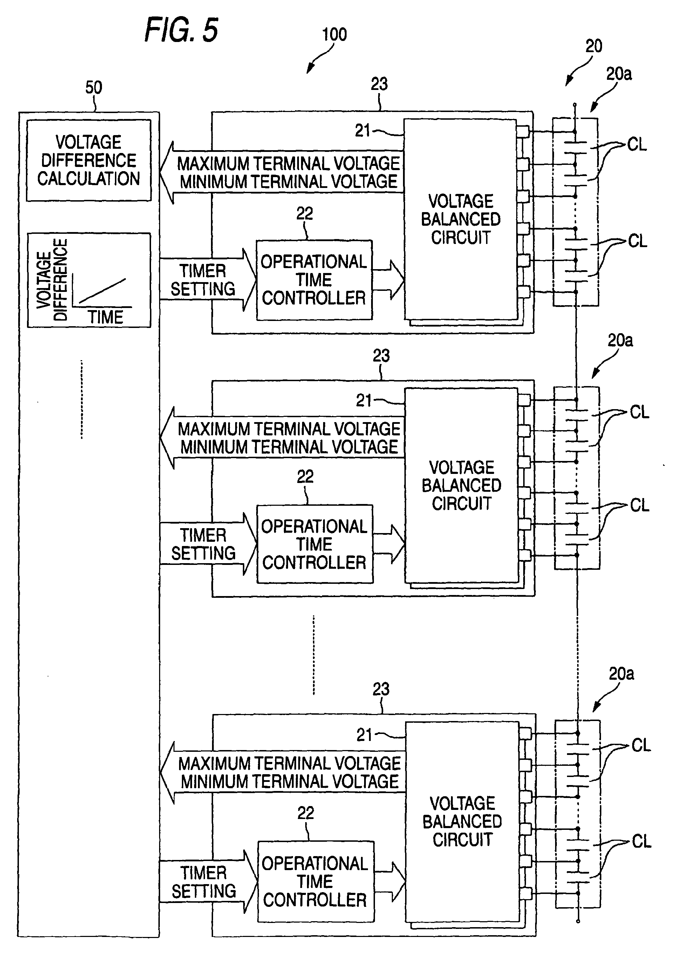

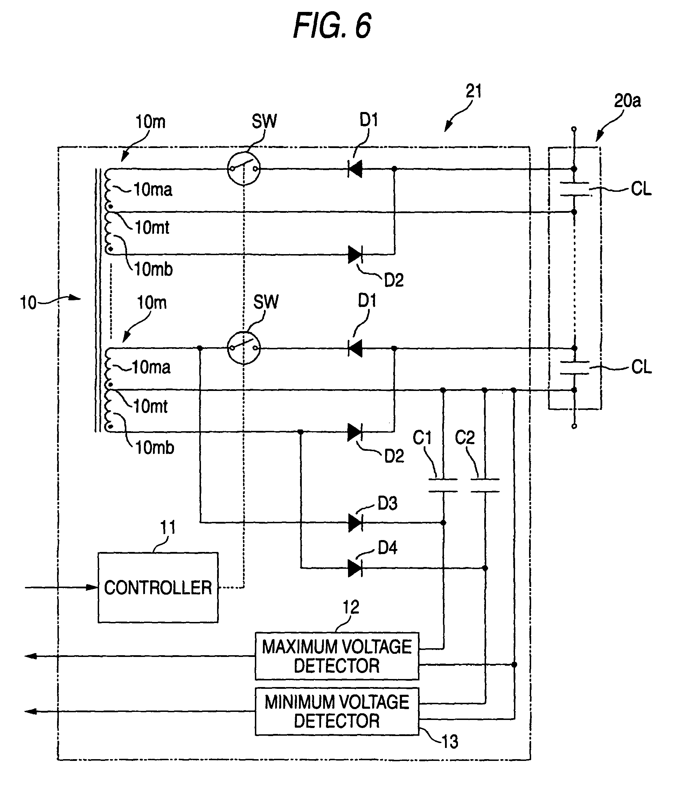

Figs. 5 and 6 are concerned about a second embodiment of the invention: Fig. 5 is a structural view of the voltage equalization control system and Fig. 6 is a circuit diagram of the voltage balanced circuit.

The second embodiment is applied to the case where a plurality of accumulators CL, ... are connected in series a lot, hence to form a power source of high voltage mechanism, like a battery for a hybrid car or an electric vehicle.

As illustrated in Fig. 5, in the second embodiment, a voltage equalization control system 100 in which a microcomputer 50 is provided as a main part to control an assembled battery 20 including a plurality of battery modules 20a connected in series, each of the battery modules 20a having the comparatively small number of the accumulators CL, ... connected in series, which battery module corresponds to the assembled battery 2 of the first embodiment, performs the voltage equalization control on the accumulators CL, ... in every battery module 20a.

The voltage equalization control system 100 of the second embodiment is designed to simplify the processing, by putting together into the microcomputer 50 the functions of the voltage difference calculator (voltage difference calculating means) 5 and the timer setting unit (operational time setting means) 6 in the voltage equalization control system 1 of the first embodiment. Namely, the voltage equalization control system 100 further comprises each voltage equalization controller 23 in every battery module 20a, which controller includes the voltage balanced circuit (module voltage equalizing means) 21 and the operational time controller (operational time controlling means) 22, and the microcomputer 50 intensively controls the voltage equalization controllers 23 in the respective battery modules 20a.

In order to avoid an increase in cost according to an increase of the number of the amplifiers detecting the voltages of the respective accumulators CL, ..., the voltage balanced circuit 21 has a function of equalizing the voltages in the accumulators CL, ... within each battery module 20a as well as a function of detecting the maximum terminal voltage Vmax and the minimum terminal voltage Vmin of the accumulators CL, ....

Fig. 6 shows a circuit example of the voltage balanced circuit 21, which is designed to have a maximum voltage detector 12 for detecting the maximum terminal voltage Vmax of the accumulators CL, ... and a minimum voltage detector 13 for detecting the minimum terminal voltage Vmin in addition to the structure of the voltage balanced circuit 3 of the first embodiment. The maximum terminal voltage Vmax detected by the maximum voltage detector 12 and the minimum terminal voltage Vmin detected by the minimum voltage detector 13 are supplied to the microcomputer 50, where the voltage difference ΔV is calculated.

The maximum voltage detector 12 has two input ports; one input port is connected to a condenser C1 connected to the first winding 10 ma of some basic winding 10 m, and the other input port is connected to the center tap 10 mt of the basic winding 10 m. The condenser C1 is a condenser for storing (recording) voltage occurring in the first winding 10 ma of the basic winding 10 m at a point of turning on the switching element SW, which is connected between the output side of a diode D3 connected to the winding end terminal of the first winding 10 ma of some basic winding 10 m and the center tap 10 mt of the basic winding 10 m.

Similarly, the minimum voltage detector 13 has two input ports; one input port is connected to a condenser C2 connected to the second winding 10 mb of some basic winding 10 m, and the other input port is connected to the center tap 10 mt of the basic winding 10 m. The condenser C2 is a condenser for storing (recording) voltage occurring in the second winding 10 mb of the basic winding 10 m at a point of turning off the switching element SW, which is connected between the output side of a diode D4 connected to the winding start terminal of the second winding 10 mb of some basic winding 10 m and the center tap 10 mt of the basic winding 10 m.

The above voltage equalizing operation of the voltage balanced circuit 21 is similar to that of the voltage balanced circuit 3 of the first embodiment. At a point of turning on the respective switching elements SW, according to the energy accumulation into the transformer 10, the accumulated current flows from the accumulator CL having the maximum terminal voltage Vmax to the basic winding 10 m, while at a point of turning off the respective switching elements SW, according to the energy discharge from the transformer 10, the discharge current flows from the basic winding 10 m to the accumulator CL having the minimum terminal voltage Vmin. Thus, the voltage equalizing operation is performed on the respective cells at the both points of accumulating energy into the transformer 10 and discharging energy from the transformer 10.

In the equalizing operation, at a time of turning on the respective switching elements SW, according to the accumulated current from the accumulator CL having the maximum terminal voltage Vmax, there occurs the voltage corresponding to the maximum terminal voltage Vmax in the first winding 10 ma of the basic winding 10 m, and the terminal voltage of the condenser Cl charged through the diode D3 is stored as the maximum terminal voltage Vmax of the accumulators CL.

At a time of turning off the respective switching elements SW, according to the discharge current into the accumulator CL having the minimum terminal voltage Vmin, there occurs the voltage corresponding to the minimum terminal voltage Vmin in the second winding 10 mb of the basic winding 10 m and the terminal voltage of the condenser C2 charged through the diode D4 is stored as the minimum terminal voltage Vmin of the accumulators CL.

The maximum terminal voltage Vmax stored in the condenser C1 and the minimum terminal voltage Vmin stored in the condenser C2 are read by the maximum voltage detector 12 and the minimum voltage detector 13 respectively at a predetermined sampling cycle and supplied to the microcomputer 50.

In the voltage equalization control of the assembledbattery 20 by the microcomputer 50, when the voltage balanced circuit 21 is stopped because the assembled battery 20 is in a rest state, since the accurate maximum terminal voltage Vmax and minimum terminal voltage Vmin cannot be obtained, at first, the voltage equalizing operation is started by a control signal for making the controller 11 of the voltage balanced circuit 21 to supply an oscillation pulse.

When the maximum terminal voltage Vmax and the minimum terminal voltage Vmin are respectively supplied from the maximum voltage detector 12 and the minimum voltage detector 13 to the microcomputer 50, according to the operation of the voltage balanced circuit 21, the microcomputer 50 calculates the voltage difference ΔV at once according to the data, and according to the resultant voltage difference ΔV, the temporal control for the voltage equalizing operation is performed on each of the voltage balanced circuits 21.

Although the temporal control on each of the voltage balanced circuits 21 by the microcomputer 50 is basically the same as the first embodiment, the following detailed processing is different slightly.

The controlling form of the temporal control according to the second embodiment is the form of controlling the temporal operation of all the voltage balanced circuits 21 according to the voltage difference ΔVbetween the maximum terminal voltage Vmax and the minimum voltage Vmin of the accumulators CL, ... within the assembled battery 20. Specifically, according to a di fference between the maximum of the maximum terminal voltages Vmaxl, Vmax2, ... of the respective battery modules 20a and the minimum of the minimum terminal voltages Vminl, Vmin2, ... of the respective battery modules 20a, in other words, the voltage difference ΔV between the maximum terminal voltage Vmax and the minimum terminal voltage Vmin of all the accumulators CL, ... forming the assembled battery 20, the time of the temporal operation on all the voltage balanced circuits 21 is uniformly set referring to the same timer selection map as the first embodiment. As the timer selection map, a single map applied to the whole assembled battery 20 is used.

While the timer is counting down, the voltage difference ΔV is properly updated through voltage feedback and the preset value of the timer is reset. When the count value of the timer gets 0 and the countdown starting from the preset value is finished, the voltage equalizing operations by all the voltage balanced circuits 21 are stopped by supplying the control signals for stopping the pulse oscillation to the controllers 11 of the voltage balanced circuits 21 or by shutting down the power of the circuit.

After performing the voltage equalization control on the respective battery modules 20a, when voltage difference between the battery modules 20a, ... is not negligible, the operational time is set according to the voltage difference between the maximum voltage and the minimum voltage of, for example, the representative voltage of the respective battery modules 20a, and within this operational time, the timer control for the voltage equalizing operation is performed on all the voltage balanced circuits 21 within the assembled battery 20. In this case, the timer selection map in the first temporal control can be used.

The second embodiment also can avoid a long time voltage equalizing operation and moderate a decrease in the remaining energy of an assembled battery, thereby assuring the quality of the battery.

It will be apparent to those skilled in the art that various modifications and variations can be made to the described preferred embodiments of the present invention without departing from the spirit or scope of the invention. Thus, it is intended that the present invention cover all modifications and variations of this invention consistent with the scope of the appended claims and their equivalents.

## Claims

1. A voltage equalization control system of accumulator, comprising:
a voltage equalization unit which that voltages of a plurality of accumulators forming an assembled battery;
a voltage detector that detects a maximum voltage and a minimum voltage in the accumulators;
a voltage difference calculator that calculates a voltage difference between the maximum voltage and the minimum voltage detected by the voltage detector;
an operational time setting unit that sets an operational time of operating the voltage equalization unit, according to the voltage difference calculated by the voltage difference calculator; and
an operational time controller that operates the voltage equalization unit within the operational time set by the operational time setting unit so as to carry out the voltage equalizing operation on the accumulators and-stops the voltage equalization unit at a time of exceeding the operational time.

2. The voltage equalization control system according to Claim 1, wherein the operational time setting unit continually resets the operational time according to a latest value of the voltage difference varying according to the voltage equalizing operation of the voltage equalization unit, and
the operational time controller resets the time for stopping the voltage equalization unit, according to the operational time reset by the operational time setting unit.

3. The voltage equalization control system according to claim 1 or 2, wherein the operational time setting unit sets the operational time according to a convergent time toward an average voltage in a pattern where a half of the accumulators have the maximum voltage and another half of the accumulators have the minimum voltage in the assembled battery.

4. The voltage equalization control system according to one of claims 1 to 3, wherein the operational time controller stops the voltage equalizing unit when the voltage difference converges to a predetermined target value within the operational time.

5. The voltage equalization control system according to claim 1, wherein an assembled battery is formed with a plurality of battery modules, each of the battery modules is formed by a plurality of accumulators,
a plurality of voltage equalization units are respectively provided for the plurality of battery modules,
the voltage equalization units equalize voltages of the plurality of accumulators in the respective battery modules, and
the voltage detector detects the maximum voltage and the minimum voltage of all the accumulators in the assembled battery.

6. The voltage equalization control system according to Claim 5, wherein the operational time setting unit sets the operational time according to a convergent time toward an average voltage in a pattern where a half of the accumulators have the maximum voltage and another half of the accumulators have the minimum voltage in the assembled battery.

7. The voltage equalization control system according to Claim 5 or 6, wherein the operational time setting unit continually resets the operational time according to a latest value of the voltage difference varying according to the voltage equalizing operation of the module voltage equalization units, and
the operational time controller resets the time period for stopping the voltage equalization units, according to the operational time reset by the operational time setting unit.
